# EUROPÄISCHE PATENTSCHRIFT

(11) **EP 1 093 961 B1**
(45) Veröffentlichungstag und Bekanntmachung des Hinweises auf die Patenterteilung: **01.12.2004**
(21) Anmeldenummer: 00119486.9
(22) Anmeldetag: 18.09.2000
(51) Int. Cl.: B60N 3/06

(54) **Energieabsorbierende Fussablage**
Energy absorbing footrest
Repose-pieds à absorbtion d'énergie

(30) Priorität: 23.10.1999 DE 19951121
(43) Veröffentlichungstag der Anmeldung: 25.04.2001
(73) Patentinhaber: Volkswagen Aktiengesellschaft, 38436 Wolfsburg (DE)
(72) Erfinder: Rösemann, Harald, 38518 Gifhorn (DE); Winkler, Detlef, 38448 Wolfsburg (DE)

(56) Entgegenhaltungen:
- EP-A- 0 798 160
- DE-A- 3 531 805
- DE-A- 19 725 064
- DE-U- 8 713 532
- PATENT ABSTRACTS OF JAPAN vol. 96, no. 10, 31. Oktober 1996 (1996-10-31) -& JP 08 164782 A (MAZDA MOTOR CORP), 25. Juni 1996 (1996-06-25)

## Beschreibung

Die Erfindung betrifft eine an einem Fahrzeugboden befestigbare energieabsorbierende Fußablage, wie in der gattungsbildenden JP 0 164 782 A offenbart ist, siehe die Figuren 6 und 7.

Fußablagen dieser Art sind auch beispielsweise aus der DE 35 31 805 A1 und der DE 197 25 064 A1 bekannt. Sie bieten dem Fahrer oder Beifahrer eines Kraftfahrzeugs nicht nur generell die Möglichkeit, einen Fuß, der nicht zur Betätigung von Pedalen benötigt wird, bequem abzulegen oder abzusetzen, sondern sind auch so ausgebildet, daß bei einem Frontalunfall des Fahrzeugs sich zwischen dem Boden desselben und dem betrachteten Fuß ein Deformationsglied befindet. Dieses besteht bei dem zitierten Stand der Technik beispielsweise aus Hartschaum, Polyurethan oder Polystyrol oder einem anderen Material, das unter Energieumsetzung deformierbar ist. Beim Einsatz derartiger Fußablagen macht es nun Schwierigkeiten, unter Berücksichtigung üblicher bodenseitiger Dämmstoffschichten und Teppichböden die Fußablage nicht nur am Bodenblech zu befestigen, sondern auch den unterschiedlichen Beanspruchungen Rechnung zu tragen. So soll bei einem Unfall der beschriebenen Art das Material der Fußstütze in möglichst großem Umfang deformiert werden, um Aufprallenergie in möglichst großem Maße in Verformungsarbeit umzuwandeln, andererseits wirkt dem aber beispielsweise die Anordnung des deformierbaren Materials der Fußablage unmittelbar unter einem Teppichboden oder einer anderen Bodenverkleidung entgegen. Hinzu kommt, daß der Teppichboden oder der andere Verkleidungsbestandteil in seinem das deformierbare Material abdeckenden Bereich besonders starken Beanspruchungen und damit besonders großem Verschleiß unterworfen ist.

Der Erfindung liegt die Aufgabe zugrunde, eine gattungsgemäße Fußablage so auszubilden, daß eine hohe Wirksamkeit bei einem Unfall sichergestellt und der Verschleiß im normalen Fahrbetrieb minimiert ist.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Ein wesentliches Merkmal der Erfindung besteht also darin, daß die Fußablage gleichsam zweigeteilt ist, sie nämlich außer einem Deformationskörper oder -element ein Abdeckprofil aufweist, das eine steife Trittfläche bildet. Während der Deformationskörper im Hinblick auf maximale Umsetzung von kinetischer Energie in Verformungsarbeit ausgelegt ist, erfolgen Materialwahl und Konstruktion der Abdeckung im Hinblick auf die Erzielung einer steifen, abriebfesten Trittfläche, die eine möglichst großflächige bzw. großvolumige Beanspruchung des Deformationskörpers bei einem Unfall sicherstellt.

Dieser Aufteilung der verschiedenen Beanspruchungen auf unterschiedliche Teile der Fußablage bei der Erfindung trägt auch das Vorsehen eines starren Gerüsts in dem Deformationskörper Rechnung, das nicht nur zur Ausbildung der Hakenverbindung zwischen diesem und der Abdeckung dient, sondern zugleich die Durchstecköffnung im Deformationskörper (zur Befestigung desselben am Fahrzeuboden) umschließt, wodurch in die Hakenverbindung von der Abdeckung her eingeleitete Kräfte gleichsam weitergeleitet werden in die starre Verbindung des Deformationskörpers mit dem Fahrzeugboden. Dies in Verbindung mit dem zweiten Befestigungselement, das außerhalb des Deformationselements liegt, bedeutet schlagwortartig hinsichtlich der Befestigungskräfte für die Abdeckung ein Umgehen des deformierbaren Materials des Deformationselements, so daß Materialwahl und konstruktive Gestaltung des Deformationselements allein durch die beschriebene angestrebte Energieumsetzung bestimmt sind. Demgegenüber kann die Abdeckung im Hinblick auf eine steife und verschleißarme Trittfläche gestaltet und materialmäßig ausgelegt sein.

Ergänzend sei auf die schalldämmende Wirkung der Fußablage hingewiesen.

Wie auch aus den Unteransprüchen hervorgeht, bildet in keinem Fall ein Teppichboden oder eine sonstige Verkleidung des Fahrzeugbodens die Trittfläche, vielmehr verläuft ein Teppichboden zwischen Deformationselement und Abdeckung, d.h. unter dieser, während eine Dämpfungsmatte unter dem Deformationselement ausgeschnitten ist und mit einem hochgestellten Rand in eine rinnenförmige Ausnahme desselben hineinragt.

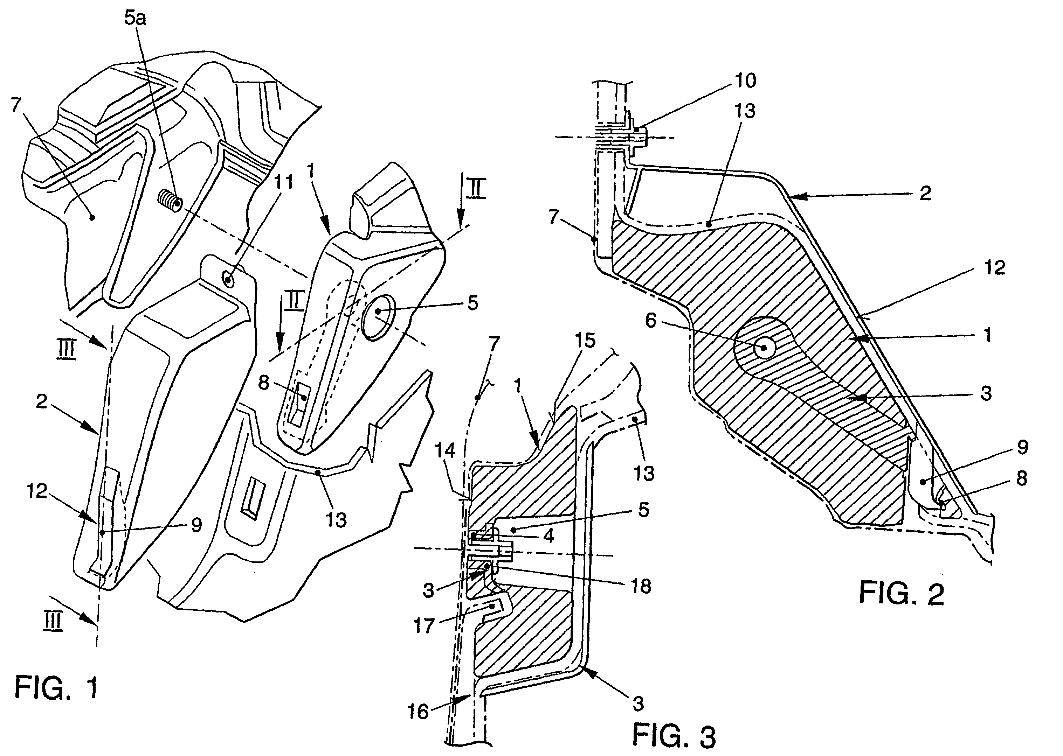

Eine diese Einzelheiten zeigende Ausführungsform der Erfindung wird im folgenden anhand der Zeichnung erläutert, deren Figur 1 perspektivisch in Explosionsdarstellung die wesentlichen Bestandteile der Fußablage wiedergibt, während die Figuren 2 und 3 die in Figur 1 durch römische Bezugszeichen angedeuteten Schnitte wiedergeben.

Betrachtet man zunächst Figur 1, so sind die wesentlichen Bestandteile der Fußablage der Deformationskörper 1 und die Abdeckung 2. In den Deformationskörper 1 bzw. in sein bleibend deformierbares Material, beispielsweise Polyurethan-Schaum, eingelassen ist das insbesondere aus den Figuren 2 und 3 ersichtliche starre Gerüst 3, das mit dem augenartigen Bereich 4 die Durchstecköffnung 5 für ein Befestigungselement 5a zur Befestigung des Deformationselements 1 am Fahrzeugboden 7 umschließt und mit einem ösenförmigen Bereich 8 einen Bestandteil einer Hakenverbindung für die Abdeckung 2 bildet. Die Abdeckung 2 besitzt auf ihrer in der Darstellung der Figur 1 hinteren Seite eine hakenförmige Abstellung 9, die im montierten Zustand der Abdeckung 2 gemäß Figur 2 den ösenförmigen Bereich 3 durchsetzt und demgemäß eine Hakenverbindung zwischen den Teilen 1 und 2 schafft. Diese Hakenverbindung wird gesichert durch das weitere Befestigungsmittel 10, das das Durchtrittsloch 11 (siehe Fig. 1) an dem von der Hakenverbindung 8, 9 entfernten Ende der Abdeckung 2 durchsetzt. Von Bedeutung ist, daß das plastisch deformierbare Material des Deformationselements 1 durch diese Verbindung mit den Verbindungsstellen 8, 9 sowie 10, 11 von allen im normalen Fahrbetrieb auftretenden Kräften einschließlich der Befestigungskräfte für die Abdeckung 2 entlastet ist. Bei einem in Längsrichtung des Fahrzeugs erfolgenden Unfall dagegen überträgt die Abdeckung 2 auf ihre Trittfläche 12 einwirkende Kräfte großflächig auf das deformierbare Material des Deformationselements 1.

Zwischen den Teilen 1 und 2 besteht ein kleiner Abstand, in dem der Teppichboden 13 verläuft. Unter der Fläche 14 des Deformationselements 1, die ebenso wie die Fläche 15 desselben dem Verlauf des Fahrzeugbodens angepaßt ist, ist die Dämmungsmatte 16 ausgeschnitten; dort weist sie den etwa senkrecht zu ihrer Ebene abgestellten Rand 17 auf, der von der rinnenartige Aufnahme 18 in dem Deformationselement 1 aufgenommen ist. Dadurch ist eine sichere Befestigung des Deformationselements 1 an der seiner Fläche 14 gegenüberstehenden Fläche des Fahrzeugbodens 7 gewährleistet.

Bei der Erfindung ist also, wie auch aus dieser Beschreibung eines Ausführungsbeispiels folgt, gleichsam eine individuelle Aufteilung der verschiedenen Beanspruchungen und Anforderungen auf verschiedene Bestandteile vorgenommen: Das Deformationselement 1 wird praktisch nur bei einem Unfall beansprucht und kann demgemäß für seine Eigenschaft als Deformationselement ausgelegt werden. Die Abdeckung 2 hat ihrerseits praktisch nur die Aufgabe, mechanisch robust zu sein, denn sie soll eine verschleißarme Trittfläche bilden und bei einem Unfall auf diese ausgeübte mechanische Kräfte möglichst großflächig auf das Deformationselement 1 übertragen. Schließlich ist in diesem das steife Gerüst 3 vorgesehen, das insbesondere zur Befestigung der Abdeckung 2 erforderliche Befestigungskräfte unter Umgehung des deformierbaren Materials des Deformationselements 1 unmittelbar in den Fahrzeugboden einleitet. Die Hakenverbindung zwischen Abdeckung 2 und Deformationselement 1 bzw. Fahrzeugboden verringert gegenüber einer Befestigung der Abdeckung auch an dieser Stelle unmittelbar am Fahrzeugboden den Platzbedarf und ist leicht durch Relativbewegung zwischen den Teilen 1 und 2 herstellbar.

## Patentansprüche

1. An einem Fahrzeugboden befestigbare energieabsorbierende Fußablage, umfassend ein Deformationselement (1) und ein Abdeckprofil (2), **dadurch gekennzeichnet, daß** das Deformationselement (1) mit einer etwa in Fahrzeugquerrichtung verlaufenden Durchstecköffnung (5) für ein erstes Befestigungselement (5a) vorgesehen ist, das zwei der Geometrie eines Eckenbereichs des Fahrzeugbodens (7) angepaßte Außenflächen (14, 15) aufweist und dessen verbleibende Außenflächen von dem eine steife Trittfläche (12) für den Fuß bildenden Abdeckprofil (2) abgedeckt sind, das über eine durch Relativbewegung zwischen ihm und dem Deformationselement (1) herstellbare Hakenverbindung (8, 9) an diesem sowie außerhalb desselben an einer von der Hakenverbindung (8, 9) entfernten Stelle über ein zweites Befestigungselement (10) am Fahrzeugboden (7) befestigt und gegen Aufhebung der Hakenverbindung (8, 9) gesichert ist, und daß im Deformationselement (1) ein die Durchstecköffnung (5) und die Hakenverbindung (8, 9) erfassendes und kraftübertragend verbindendes starres Gerüst (3) vorgesehen ist.

2. Fußablage nach Anspruch 1, **dadurch gekennzeichnet, daß** zur Bildung der Hakenverbindung das Abdeckprofil (2) innenseitig einen hakenförmigen Ansatz (9) und das Gerüst (3) eine ösenartige Ausnehmung (8) aufweisen.

3. Fußablage nach Anspruch 1 oder 2, **dadurch gekennzeichnet, daß** zwischen Deformationselement (1) und Abdeckprofil (2) ein Abstand zur Aufnahme eines Teppichbodens (13) besteht.

4. Fußablage nach einem der Ansprüche 1 bis 3, **dadurch gekennzeichnet, daß** das Deformationselement (1) mit einer rinnenförmigen Aufnahme (18) für einen abgestellten Rand (17) einer Dämmatte (16) versehen ist.

5. Fußablage nach einem der Ansprüche 1 bis 4, **dadurch gekennzeichnet, daß** das Deformationselement (1) aus Polyurethan besteht.

## Claims

1. Energy-absorbing footrest, comprising a deformation element (1) and a covering profile (2), which can be fastened to a vehicle floor, **characterized in that** the deformation element (1) is provided with a plug-through opening (5) which runs approximately in the transverse direction of the vehicle and is intended for a first fastening element (5a) which has two outer surfaces (14, 15) matched to the geometry of a corner region of the vehicle floor (7) and the remaining outer surfaces of which are covered by the covering profile (2), which forms a stiff tread surface (12) for the foot, is fastened to the deformation element (1) via a hook connection (8, 9), which can be produced by a relative movement between the covering profile and the deformation element (1), and, outside the deformation element, is fastened at a point remote from the hook connection (8, 9) via a second fastening element (10) to the vehicle floor (7) and is secured against the hook connection (8, 9) becoming undone, and **in that** a rigid frame (3) which intercepts the plug-through opening (5) and the hook connection (8, 9) and connects them in a force-transmitting manner is provided in the deformation element (1).

2. Footrest according to Claim 1, **characterized in that**, in order to form the hook connection, the covering profile (2) has a hook-shaped projection (9) on the inside and the frame (3) has an eye-like recess (8).

3. Footrest according to Claim 1 or 2, **characterized in that** there is a spacing between the deformation element (1) and covering profile (2) to accommodate a carpet (13).

4. Footrest according to one of Claims 1 to 3, **characterized in that** the deformation element (1) is provided with a channel-shaped holder (18) for a deposited edge (17) of an insulating mat (16).

5. Footrest according to one of Claims 1 to 4, **characterized in that** the deformation element (1) consists of polyurethane.

## Revendications

1. Repose-pied à absorption d'énergie pouvant être fixé sur un plancher de véhicule, comprenant un élément de déformation (1) et un profilé de recouvrement (2), **caractérisé en ce que** l'élément de déformation (1) est pourvu d'une ouverture traversante (5) s'étendant approximativement dans la direction transversale du véhicule pour un premier élément de fixation (5a), qui présente deux faces extérieures (14, 15) adaptées à la géométrie d'une région de coin du plancher du véhicule (7) et dont les faces extérieures restantes sont recouvertes par le profilé de recouvrement (2) formant une face de pédale raide (12) pour le pied, le profilé de recouvrement étant fixé, par le biais d'une connexion à crochet (8, 9) pouvant être produite par un déplacement relatif entre lui et l'élément de déformation (1), à ce dernier et en dehors de celui-ci à un endroit éloigné de la connexion à crochet (8, 9) par le biais d'un deuxième élément de fixation (10) sur le plancher du véhicule (7) et étant protégé contre le soulèvement de la connexion à crochet (8, 9), et **en ce que** l'on prévoit dans l'élément de déformation (1) une structure (3) rigide engageant l'ouverture traversante (5) et la connexion à crochet (8, 9) et les reliant avec transfert de force.

2. Repose-pied selon la revendication 1, **caractérisé en ce que** pour la formation de la connexion à crochet, le profilé de recouvrement (2) présente du côté intérieur une saillie en forme de crochet (9) et la structure (3) présente un évidement en forme d'oeillet (8).

3. Repose-pied selon la revendication 1 ou 2, **caractérisé en ce qu'**il existe entre l'élément de déformation (1) et le profilé de recouvrement (2) une distance permettant de recevoir un tapis de sol (13).

4. Repose-pied selon l'une quelconque des revendications 1 à 3, **caractérisé en ce que** l'élément de déformation (1) est pourvu d'un logement de forme annulaire (18) pour un bord déposé (17) d'une nappe fibreuse isolante (16).

5. Repose-pied selon l'une quelconque des revendications 1 à 4, **caractérisé en ce que** l'élément de déformation (1) se compose de polyuréthane.
